# EUROPÄISCHE PATENTSCHRIFT

(11) **EP 0 662 225 B1**
(45) Veröffentlichungstag und Bekanntmachung des Hinweises auf die Patenterteilung: **01.04.1998**
(21) Anmeldenummer: 93920759.3
(22) Anmeldetag: 17.09.1993
(51) Int. Cl.: G05B 19/10, G05B 19/042

(54) **VERFAHREN ZUR EINGABE UND ANZEIGE DER EINSTELLUNGSPARAMETER EINER VORRICHTUNG ZUM BESCHICHTEN VON GEGENSTÄNDEN**
PROCESS FOR INTRODUCING AND DISPLAYING THE ADJUSTMENT PARAMETERS OF A DEVICE FOR COATING OBJECTS
PROCEDE D'INTRODUCTION ET D'AFFICHAGE DES PARAMETRES DE REGLAGE D'UN DISPOSITIF POUR REVETIR DES OBJETS

(30) Priorität: 23.09.1992 DE 4231766
(43) Veröffentlichungstag der Anmeldung: 12.07.1995
(73) Patentinhaber: ALCATEL ALSTHOM COMPAGNIE GENERALE D'ELECTRICITE, 75008 Paris (FR)
(72) Erfinder: HISSEN, Hans, D-64291 Darmstadt (DE); SCHUMACHER, Hans, D-70193 Stuttgart (DE)
(74) Vertreter: Pohl, Herbert, Dipl.-Ing.
(86) Internationale Anmeldenummer: EP9302525
(87) Internationale Veröffentlichungsnummer: WO9407191

(56) Entgegenhaltungen:
- WO-A-89/06181
- WO-A-90/00273
- WO-A-91/06050
- DE-A- 3 014 114
- DE-U- 9 110 348
- GB-A- 2 224 370
- US-A- 4 831 548
- US-A- 4 987 527

## Beschreibung

Die Erfindung bezieht sich auf ein Verfahren zur Eingabe und Anzeige der Einstellungsparameter einer Vorrichtung zum Beschichten von Gegenständen, insbesondere Fahrzeugen oder Fahrzeugteilen, die von einer Transportvorrichtung in Beschichtungspositionen bewegt werden, wobei in einer Beschichtungsstation wenigstens ein Spritz- oder Sprühwerkzeug fest oder relativ zu den Gegenständen bewegbar angeordnet ist und nach den Einstellungsparametern gesteuerte Stellglieder aufweist.

Es sind Vorrichtungen zum automatischen Beschichten von Gegenständen, wie Fahrzeugkarosserien mit Spritzvorrichtungen, bekannt, die an eine Programmsteuervorrichtung angeschlossen sind. Die Programmsteuervorrichtung stellt die Parameter der Spritzvorrichtung entsprechend den Arbeitsschritten ein. Die Gegenstände werden durch bestimmte Beschichtungspositionen mit einer Transportvorrichtung hindurchgeführt (DE-PS 30 14 114).

Zum Beschichten von beispielsweise Automobilkarosserien werden Lackierstrassen eingesetzt, durch die die Karosserien mit einem Transportmechanismus hindurchbewegt werden. Die Lackierstrassen sind in wenigstens drei Streckenabschnitte aufgeteilt, nämlich den Abschnitt für die Farbvorwahl, den Abschnitt der Typenerkennung und den eigentlichen Lackierabschnitt.

Beim Durchlaufen der Karosserie durch den Farbvorwahlabschnitt wird über eine Eingabetastatur der Programmsteuerung die gewünschte Farbe vorgegeben.

Während des Durchlaufs durch den Farbvorwahlabschnitt werden auch Spülvorgänge entweder automatisch oder von einer Bedienungsperson gesteuert durchgeführt. Für die Karosserien sind Farben auszuwählen. Farbwahlwerte können innerhalb des Farbvorwahlabschnitts auch gelöscht oder korrigiert werden. Weiterhin ist eine Wiederholung der Farbwahl durch einen entsprechenden Befehl möglich. Bei einem Farbwechsel läuft ein Spülvorgang ab, durch den die Sprühorgane wie Spritz- oder Sprühköpfe und die Leitungen gereinigt werden. Die Lackierung wird typenabhängig ausgeführt. In die Programmsteuerung wird deshalb der Typ der jeweiligen Karosserie eingegeben. Im Typenerkennungsabschnitt wird der Typ der durchlaufenden Karosserie mit Sensoren festgestellt. In Abhängigkeit vom Typ wird von der Programmsteuerung ein entsprechendes Lackierprogramm ausgewählt.

In der Lackierstrecke befinden sich verschiedene Sprüh- oder Spritzeinrichtungen, die fest oder beweglich sein können. Feste Sprühvorrichtungen sind z. B. seitlich höhenversetzt neben den Gegenständen angeordnet. Weiterhin kann eine vertikal bewegliche Dachsprühvorrichtung vorgesehen sein.

Der Erfindung liegt das Problem zugrunde, ein Verfahren zu entwickeln, mit dem die Einstellungsparameter einer Beschichtungsvorrichtung für Gegenstände beschichtungsobjektbezogen übersichtlich und möglichst umfassend für den jeweiligen Beschichtungsvorgang eingegeben und dargestellt werden können.

Das Problem wird erfindungsgemäss dadurch gelöst, dass auf dem Monitor eines Personalcomputers, welcher Parametrierdaten, die von einer Eingabevorrichtung für die Beschichtungsvorrichtung erzeugt werden, entweder off-line speichert oder on-line an eine mit der Beschichtungsvorrichtung verbundene Programmsteuerung weiterleitet, mit mindestens einem Fenster eine graphische Ansicht des Gegenstands und masstabgerecht die auf der Oberfläche vorhandene Beschichtungsfläche des wenigstens einen Spritzwerkzeugs neben der Ansicht des Gegenstands dargestellt werden, dass in der Ansicht des Gegenstands in dessen Transportrichtung nacheinander Beschichtungszonen längs einer durch die Mitte des dargestellten Spritzwerkzeugs verlaufenden Linie schematisch durch Rechtecke dargestellt werden, deren Länge jeweils ein Mass für die Beschichtungszonenlänge und deren Höhe ein Mass für einen Einstellwert des Spritzwerkzeugs ist, dass unter der Ansicht des Gegenstands Zeilen eines Eingabefelds mit numerischen Angaben des Typs des angezeigten Gegenstands und der Kennung des über die Eingabevorrichtung für die Parametrierung aufrufbaren Spritzwerkzeugs und wenigstens die Beschichtungszonenlängen mit einem weiteren parametrierbaren Einstellwert angezeigt werden und dass die off- oder on-line Betriebsart der Programmsteuerung und eine Sammelmeldung über Störungen angezeigt werden. Mit diesem Verfahren lassen sich von der Bedienungsperson die wesentlichen Einstelldaten der Beschichtungsvorrichtung nicht nur numerisch sondern analog unter Zuordnung auf den zu beschichtenden Gegenstand auf einmal erkennen. Während die numerischen Angaben die Einstellwerte exakt wiedergeben, zeigt die analoge Darstellung die Relation zu anderen Einstellwerten an, so dass die Wirkungen von Einstellwerten deutlicher und schneller erfasst werden können. Die Bedienungsperson kann sich anhand weniger Anzeigen ein Gesamtbild über die Einstellwerte der Beschichtungsvorrichtung machen und daraus SchLüsse ziehen. Besonders vorteilhaft ist das Verfahren in Verbindung mit Lackierstrassen für Fahrzeuge oder Fahrzeugteile wie Karosserien.

Es ist für die Parametrierung zweckmässig, wenn die Einstellwerte der jeweils für eine Edition aufgerufenen alphanumerisch oder graphisch dargestellten Spritzwerkzeuge oder Stellglieder in einer vorgegebenen Farbe auf dem Monitor angezeigt werden. Diese Farbe ist beispielsweise grün. Unter einer farbigen Anzeige von Spritzwerkzeugen und Einstellwerten ist auch eine solche zu verstehen, bei der die Farbe jeweils unterlegt ist, während die Ziffern und Buchstaben, z. B. schwarz oder hell, dargestellt werden.

Neben den für die Edition der Einstellwerte ausgewählten Komponenten der Beschichtungsvorrichtung werden noch Einstellwerte von anderen Komponenten der Beschichtungsvorrichtung angezeigt. Die Einstellwerte dieser anderen Komponenten können erst nach einem entsprechenden Aufruf editiert werden. Solange die Komponenten nicht aufgerufen sind, werden die zugeordneten Einstellwerte alphanumerisch und gegebenenfalls graphisch in einer anderen Farbe angezeigt. Diese Farbe ist beispielsweise blau und deutet darauf hin, dass die Einstellwerte zwar änderbar sind, jedoch nicht in einem für die Edition aufgerufenem Zustand.

Schliesslich sind in der Beschichtungsvorrichtung Komponenten vorhanden, deren Einstellwerte zwar für die Bedienung und überwachung der Vorrichtung notwendig sind, die aber nicht über die Eingabevorrichtung eingestellt oder geändert werden können. Diese Einstellwerte und die Hinweise auf die Komponenten werden vorzugsweise in einer weiteren Farbe, z. B. gelb, dargestellt, die anzeigt, dass die Komponenten und deren Einstellwerte nicht über die Eingabeeinrichtung parametriert werden können.

Bei einer bevorzugten Ausführungsform werden auf dem Monitor mit einem weiteren Fenster eine Ansicht des Gegenstands innerhalb eines die parametrierbare Länge und Breite der Bearbeitung anzeigenden Rechtecks dargestellt, das innerhalb eines den notwendigen Arbeitsbereich des Spritzwerkzeugs anzeigenden Rechtecks liegt, sowie ein zweites dem Arbeitsbereich zugeordnetes Rechteck in einem transportgeschwindigkeitsabhängigen Abstand vom ersten Rechteck über Zeilen eines Eingabefelds dargestellt, in denen alphanumerisch der Typ des Gegenstands die Fördergeschwindigkeit, der für die Bearbeitung notwendige Überhang über den Gegenstand, die Lage von dem den Beschichtungsvorgang einleitenden Startnocken und die Länge und Breite des jeweiligen Gegenstands dargestellt werden.

Eine Typenangabe kann in einer Nummer oder einem symbolischen Namen bestehen. Ebenso können den Farben oder Sprühvorrichtungen Nummern oder symbolische Namen zugeordnet werden.

Insbesondere bei grösseren Gegenständen, wie Automobile oder Karosserien, werden aufgrund des Aufbaus der Spritzvorrichtung verschiedene Seiten und verschiedene Flächen mit verschiedenen Spritzwerkzeugen beschichtet, die z. B. numerisch gesteuert werden. Vor einem Spritz- oder Sprüharbeitsgang werden die einzelnen Teilflächen des Gegenstands für die Beschichtung festgelegt. Die Teilflächen werden den einzelnen Spritz- oder Sprühwerkzeugen, die in einer Anlage vorhanden sind, in Abhängigkeit vom jeweiligen Fahrzeug oder Fahrzeugtyp zugeordnet. Die Teilflächen können neben zu beschichtenden Flächenabschnitten auch Aussparflächenabschnitte aufweisen, die dann vom jeweiligen Spritz- oder Sprühwerkzeug nicht beschichtet werden.

Den Teilflächen werden Flächennamen zugeordnet. Die Zuordnung der Teilflächen zu einem Gegenstand wird nach einer Tabelle vorgenommen.

Die Hüllkurven der Teilflächen müssen entsprechend den Abmessungen des zu beschichtenden Gegenstands festgelegt werden. Es ist günstig, die Parametrierung der Hüllkurven anhand einer Anzeige auf dem Monitor durchzuführen. Hierfür werden vorzugsweise auf dem Monitor mit einem Fenster eine Ansicht mit dem Umriss des jeweiligen Gegenstands und eine ausgewählte Teilfläche für ein Spritzwerkzeug neben dem Spritzwerkzeug graphisch sowie der Typ des Gegenstands, die Anzahl der Flächen, das ausgewählte Spritzwerkzeug und die Hüllkurvenkoordinaten alphanumerisch in Zeilen eines Eingabefelds dargestellt.

Zum Lackieren von Fahrzeugen oder Fahrzeugteilen werden vielfach als Sprühwerkzeuge Zerstäuber verwendet, deren Einstellwerte jeweils die Drehzahl, die angelegte Hochspannung, die Lackmenge und die Lenkluft ist. Für die Parametrierung ist es zweckmässig, wenn Felder für die Parametrierung der Lackmenge je Zone und Zerstäuber und der Lenkluft vorgesehen sind. Bei einer bevorzugten Ausführungsform ist daher ein auf dem Monitor darstellbares Fenster vorgesehen, mit dem eine graphische Ansicht des Fahrzeugs oder Fahrzeugteils neben Zerstäubersymbolen und den einzelnen vom jeweiligen Zerstäuber beschichtete Zonen zugeordnete Rechtecke dargestellt werden, deren Höhen jeweils ein Mass für die Lackmenge oder Lenkkluft sind, wobei ein alphanumerisches Eingabefeld unterhalb der Ansicht des Gegenstands und der Zerstäuber mit Zeilen vorgesehen ist, die sich auf das Fahrzeug oder Fahrzeugteil einen auswählbaren Zerstäuber, die Hochspannungseinstellung und die Drehzahl des ausgewählten Zerstäubers, die von den Zerstäubern beschichteten Zonen, die Farbe, die Lackmenge und die Lenkluft beziehen.

An den Zerstäubersymbolen sind jeweils Eingabefelder vorhanden, die sich auf die Auswahl der Zerstäuber oder von technologischen Daten für einen ausgewählten Zerstäuber beziehen. Für die mehrere der Zerstäuber kann ein technologischer Parameter gleichzeitig zonenbezogen dargestellt werden. Es ist aber auch möglich, für nur einen Zerstäuber mehrere Einstellparameter zonenbezogen anzuzeigen.

Vorzugsweise ist ein weiteres Fenster für die Eingabe und Anzeige der Spritzhübe alphanumerisch in Form von auf der graphischen Ansicht des Fahrzeugs oder Fahrzeugteils dargestellten parallelen Strichen in Verbindung mit technologischen, durch Rechtecke zonenabhängig ausgegebenen Daten vorgesehen, die für einen Zerstäuber auswählbar sind, wobei ein Eingabefeld vorhanden ist, mit dem die Ein-, Ausschaltpunkte der Hübe sowie die entsprechenden Ein- und Ausschaltpositionen der Sprühvorrichtungen numerisch vorgebbar sind.

Für das seitliche Beschichten der Fahrzeuge oder Fahrzeugteile werden Seitenmaschinen eingesetzt, die z. B. in drei aufeinander senkrecht stehenden Achsen steuerbar sind. Da die seitlichen Konturen der Fahrzeuge oder Fahrzeugteile eine gewisse Krümmung haben, müssen die Zerstäuber der Seitenmaschinen längs einer entsprechend angepassten Kontur bewegt werden. Je nach Form der Kontur und Breite des Fahrzeugs oder Fahrzeugteils ist eine entsprechende Kontur von den Spritzwerkzeugen bzw. Zerstäubern für einzelne, aufeinanderfolgende Teilflächen zurückzulegen.

Für eine übersichtliche Parametrierung ist es vorteilhaft, ein Fenster vorzusehen, auf dem eine Draufsicht des Fahrzeugs oder Fahrzeugteils und im Abstand davon die Kontur in Verbindung mit dem jeweiligen Zerstäuber dargestellt werden, wobei in einem Eingabefeld in Zeilen der Typ des Fahrzeugs oder Fahrzeugteils, die Farbe, die Konturkennung, die Zonen und die Achsabstände des Zerstäubers von einer Bezugslinie sowie eine Kennung für ein Programm angegeben werden, das sich auf die vom Spritzwerkzeug bzw. Zerstäuber zurückzulegende Bahn in der jeweiligen Zone bezieht.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen
- Fig. 1: eine Vorrichtung zum Beschichten von Kraftfahrzeugkarosserien schematisch von vorne;
- Fig. 2: ein auf einem Monitor darstellbares Konfigurationsabbild einer Beschichtungsvorrichtung für Fahrzeugkarosserien;
- Fig. 3: ein auf einem Monitor darstellbares Fenster für die Parametrierung geometrischer Daten für die Beschichtungsvorrichtung;
- Fig. 4: ein auf einem Monitor darstellbares Fenster für die Parametrierung von Teilflächen, die von einzelnen Spritz- bzw. Sprühwerkzeugen auf den Fahrzeugkarosserien bearbeitet werden;
- Fig. 5: ein auf einem Monitor darstellbares Fenster für die Parametrierung und Anzeige eines technologischen Einstellwerts einer ersten Reihe der Beschichtungswerkzeuge;
- Fig. 6: ein weiteres, auf einem Monitor darstellbares Fenster für die Parametrierung und Anzeige eines anderen technologischen Einstellwerts der ersten Reihe von Beschichtungswerkzeugen;
- Fig. 7a: ein zusätzliches auf einem Monitor darstellbares Fenster für die Parametrierung und Anzeige zweier technologischer Einstellwerte;
- Fig. 7b: ein anderes, auf einem Monitor darstellbares Fenster für die Parametrierung dreier technologischer Einstellwerte für ein Spritzwerkzeug;
- Fig. 8: ein auf einem Monitor darstellbares Fenster für die Parametrierung und Anzeige technologischer Einstellwerte der Spritz- bzw. Sprühvorrichtung in Verbindung mit Spritzhüben für die erste Reihe von Beschichtungswerkzeugen;
- Fig. 9: ein auf einem Monitor darstellbares Fenster für die Parametrierung und Anzeige der Spritzhübe der ersten Reihe von Beschichtungswerkzeugen;
- Fig. 10: ein auf einem Monitor darstellbares Fenster für die Anzeige und Parametrierung von Umkehrpunkten der Spritzhübe und
- Fig. 11: ein auf einem Monitor darstellbares Fenster für die Parametrierung der Kontur sowie der zonenabhängigen Programmkennungen für die zurückzulegende Zerstäuberbahn einer zweiten Reihe von Beschichtungswerkzeugen.

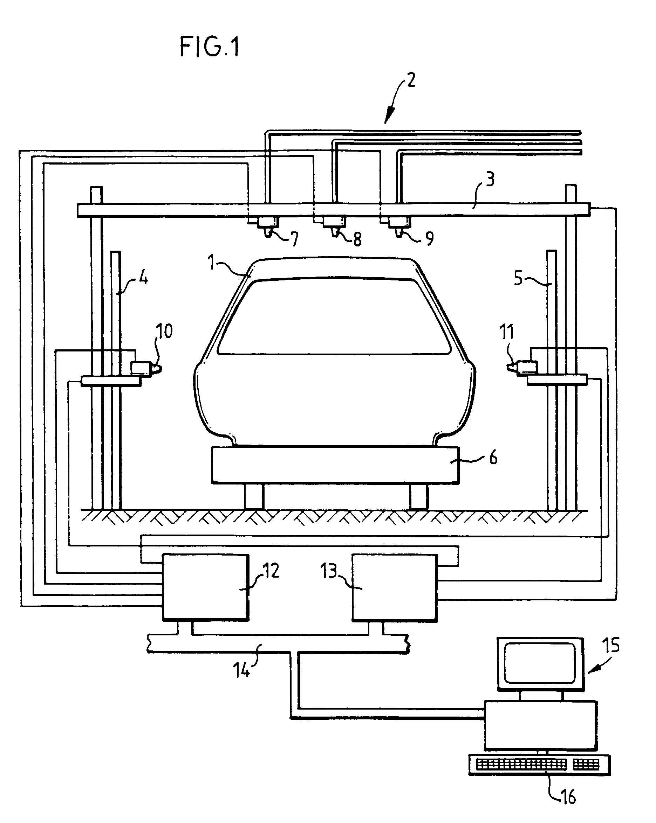

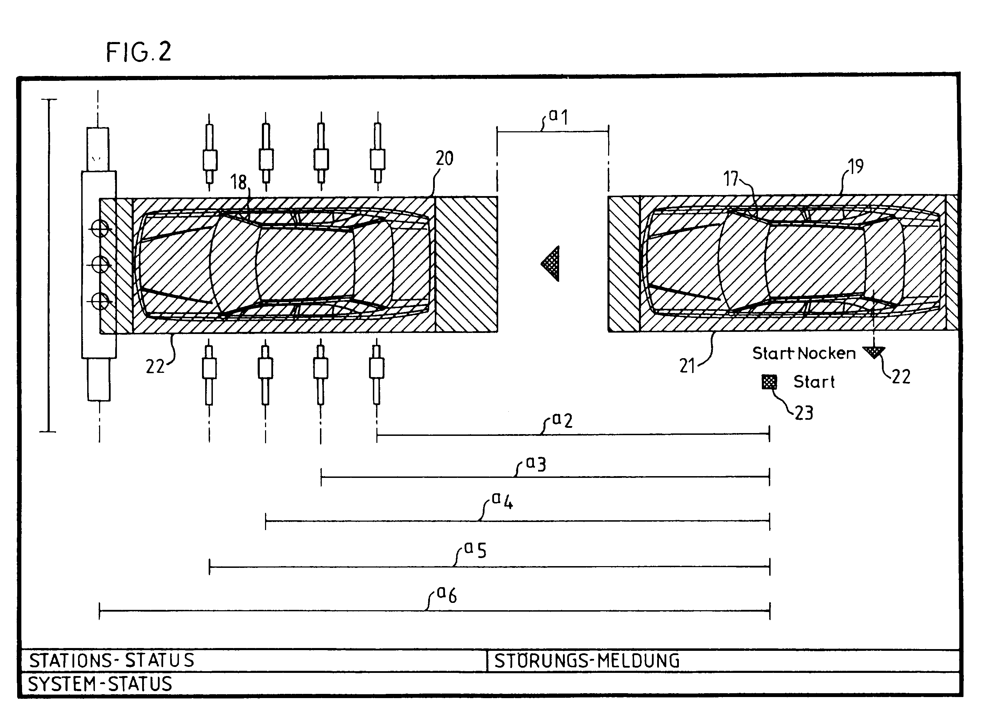

Für die Beschichtung, insbesondere Lackierung, einer Automobilkarosserie 1 sind im allgemeinen mehrere Flächenlackierautomaten vorgesehen, die einen Automatensatz bilden, der in Fig. 2 mit 2 bezeichnet ist. Der Automatensatz 2 gem. Fig. 1 besteht aus einer Beschichtungsvorrichtung 3 für das Dach der Karosserie 1 und zwei Beschichtungsvorrichtungen 4, 5 je für eine Seite der Karosserie 1. Für jede Beschichtungsvorrichtung ist eine Bahnsteuerung vorgesehen. Die Antriebe der Beschichtungsvorrichtungen sind nicht näher dargestellt. Die Karosserie 1 wird von einem Förderband 6 transportiert. Die Bahnsteuerungen werden mit dem Förderband 6 synchronisiert.

Auf den programmierbaren Bahnen werden Ein- und Ausschaltstellen für die Farbsprühorgane festgelegt. Die Beschichtungsvorrichtung 3 für das Dach der Karosserie 1 enthält als Farbsprühorgane drei in einer Reihe nebeneinander angeordnete Zerstäuber 7, 8, 9. Die Beschichtungsvorrichtungen 4, 5 für die Karosserieseiten weisen jeweils Zerstäuber 10, 11 auf. Die Zerstäuber 7 bis 11 weisen jeweils nicht näher bezeichnete Spritzrohre mit daran befestigten Glocken auf. Es sind jeweils Drehantriebe vorhanden, die die Spritzrohre drehen. Während der Drehbewegungen werden Beschichtungsmaterial und Luft im richtigen Verhältnis und in der richtigen Menge unter Kontrolle einer speicherprogrammierbaren Steuerung 12 den Glocken zugeführt.

Der aus den Glocken austretende Materialfluss kann mittels einer Fliessmengenkontrolle oder -regelung oder einer Zwangsdosierung gesteuert werden. Für die Bewegung der Glocken längs vorgegebener Bahnen ist eine weitere speicherprogrammierbare Steuerung 13 vorgesehen. Beide Steuerungen 12, 13 sind über einen Bus 14 miteinander und mit einem Personal-Computer 15 verbunden. Die Steuerung 12 ist für technologische Parameter der Beschichtungsvorrichtung massgebend und enthält die entsprechenden Prozessparameter, z. B. Beschichtungsparameter und den Typ der jeweils zu beschichtenden Fahrzeugkarosserie. Die Antriebe der Zerstäuber 7 bis 11 und die Organe für die Förderung und Dosierung des Beschichtungsmaterials sind ebenfalls mit dem Bus 14 verbunden.

Der Personal-Computer 15 wird unter anderem zur Parametrierung der Flächenlackierautomaten eingesetzt. Hierfür ist ein window-orientiertes Bediensystem vorgesehen, das on-line und off-line verwendet werden kann und als Eingabeeinrichtung eine Tastatur 16, eine Maus und/oder einen Touchscreen enthält.

Für die Parametrierung der verschiedenen Organe des Flächenlackierautomaten sind Programme vorhanden, die mittels eines Menüs aufgerufen werden. Es sind u. a. Programme speziell für die Parametrierung von Geometriedaten für die Parametrierung von Technologiedaten und für das Spülen der Zerstäuber und deren Zuleitungen bei einem Farbwechsel vorgesehen.

Für die Parametrierung ist es wichtig, dass die Konfiguration des Flächenlackierautomaten bekannt ist. über die Konfiguration sind entsprechende Daten in Registern des Computers 15 abgelegt. Die Daten beziehen sich auf die Transportgeschwindigkeit, den transportabhängigen Lackierabstand zwischen zwei durch Lackierarbeiten gekennzeichneten Arbeitsbereichen und die Lage der Zerstäuber in bezug auf Start-Nocken, von denen beim Passieren einer Karosserie die Beschichtungsarbeiten ausgelöst werden. Die Daten werden auf dem Monitor des Computers 15 graphisch dargestellt. Hierfür ist das in Fig. 2 dargestellte Konfigurationsabbild vorgesehen, auf dem zwei Ansichten von Fahrzeugkarosserien 17, 18 innerhalb von Rechtecken 19, 20 dargestellt sind, die jeweils einen Arbeitsbereich angeben, der einer Karosserie zugeordnet ist. Die Rechtecke 19, 20 sind jeweils nochmals unterteilt in die Objektlängen 21, 22. Zwischen den Rechtecken 19, 20 ist ein Abstand a1 angegeben, bei dem es sich um den bei einer bestimmten Lackiergeschwindigkeit sich einstellenden Abstand handelt. Weiterhin ist durch eine Marke 22 ein Start-Nocken dargestellt. Die Abstände a2, a3, a4, a5 und a6 von vier Beschichtungsvorrichtungen für die Seiten und der Beschichtungsvorrichtung 3 für das Dach der Karosserie 1 vom Start 23 sind ebenfalls im Konfigurationsabbild durch Linien dargestellt. Unterhalb der Linien ist eine Zeile für die alphanumerische Angabe des Status der Beschichtungsvorrichtung und einer globalen Störungsmeldung vorhanden.

Das Konfigurationsabbild zeigt der Bedienungsperson, welche für die Parametrierung bestimmten Anlagenteile vorhanden sind.

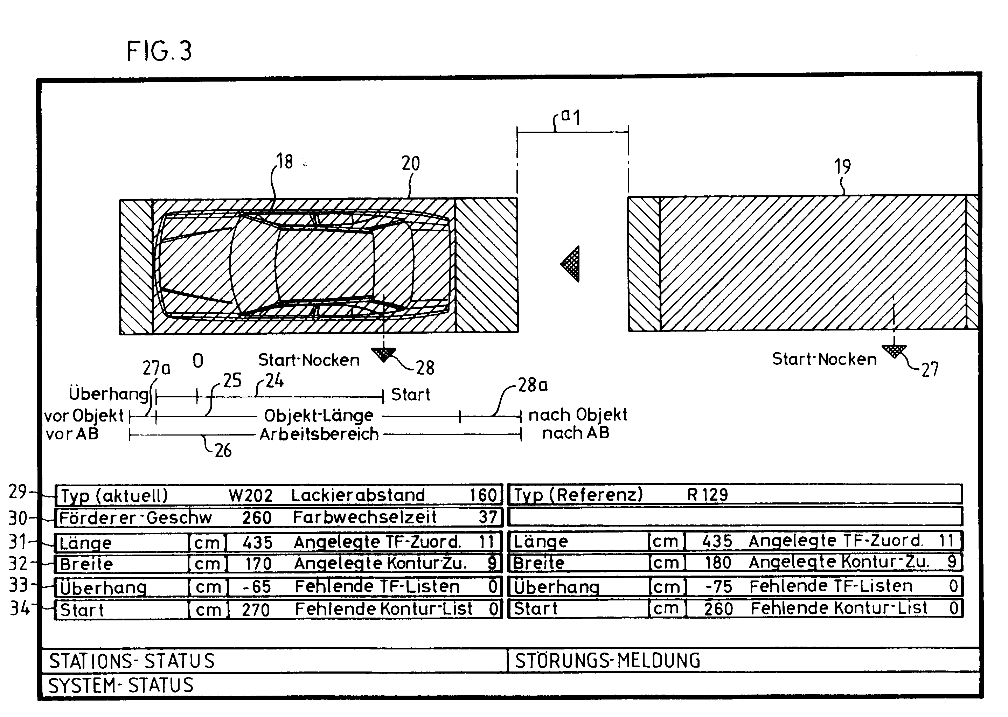

Geometrische Daten für den Lackierautomaten werden mit dem in Fig. 3 dargestellten Fenster parametriert. Für das jeweilige Objekt, eine Fahrzeugkarosserie, werden die Abmessungen, nämlich Länge, Breite, Start und überhang vorgegeben. Auf dem Monitor werden die Rechtecke 19 für zwei Arbeitsbereiche dargestellt, die durch den Lackierabstand a1 voneinander getrennt sind, wobei im Rechteck 20 die Draufsicht 18 der Fahrzeugkarosserie masstabsgerecht gezeigt wird. Unterhalb des Rechtecks 20 sind drei Linien 24, 25, 26 parallel zu einer Seite des Rechtecks 20 dargestellt. Ebenfalls sind die Stellungen der Start-Nocken dargestellt und in Fig. 3 mit 27, 28 bezeichnet. Die Linie 26 gibt die gesamte Länge des Arbeitsbereichs des Automatensatzes 2 an. Die Linie 25 zeigt die parametrierbare Objekt länge zuzüglich einem Abschnitt 27 vor und einem Abschnitt 28 nach dem Objekt an.

Die Abschnitte 27 und 28 sind zerstäuberspezifisch, können also nicht frei gewählt werden. Die Linie 24 gibt den überhang an, der typspezifisch ist.

Unterhalb der Linie 26 ist ein Feld mit Eingabezeilen angeordnet, mit dem alphanumerische Angaben angezeigt werden. In einer ersten Zeile 29 werden der Typ einer Karosserie und der Lackierabstand angezeigt. In der zweiten Zeile 30 wird die Fördergeschwindigkeit und die Farbwechselzeit angezeigt. Es folgen zwei Zeilen 31, 32, die jeweils die Länge und die Breite des Objekts angeben. In zwei weiteren Zeilen 33, 34 werden jeweils die Werte des überhangs und des Starts dargestellt. Der Typ, der Lackierabstand, die Länge und Breite sind parametrierbar. Die Angaben über Typ, Länge, Breite, überhang und Start können für einen Referenzgegenstand auf den Zeilen 29, 31, 32, 33, 34 zugleich im Abstand von den Angaben des ausgewählten Typs für die Beschichtung angezeigt werden. Weitere nicht näher bezeichnete Zeilen sind für den Stationsstatus und globale Störungsmeldung reserviert.

Den verschiedenen Karosserietypen werden Lackier- und Aussparflächen zugeordnet. Jede Teilfläche muss definiert werden und kann aus einer Lackier- und einer Aussparfläche bestehen.

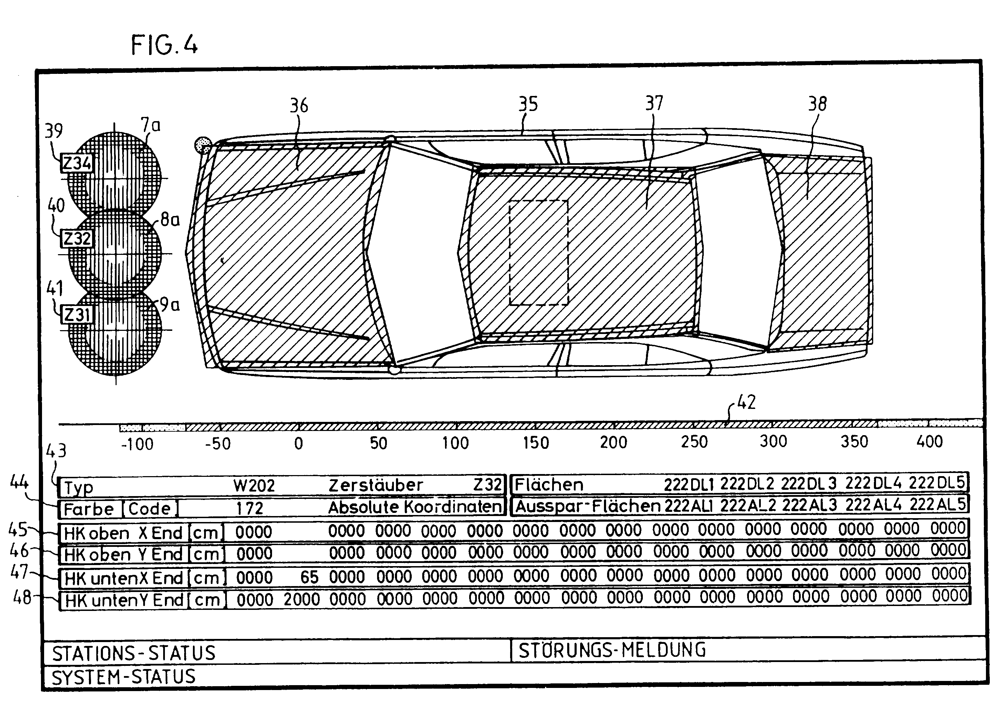

Die Zuordnung der Teilflächen zu einem Typ erfolgt tabellarisch. Die Hüllkurven der Teilflächen werden parametriert, wofür ein eigenes Fenster vorgesehen ist, das in Fig. 4 dargestellt ist. Durch die Lage des jeweiligen Zerstäubers ist die Lage der Teilflächen vorgegeben. Mit der Eingabe des jeweiligen Karosserietyps und der Bezeichnung eines Zerstäubers werden auf dem Monitor in Verbindung mit einer Draufsicht auf die Karosserie die für die entsprechende Ansicht angelegten Lackier- und Aussparflächen dargestellt, von denen in Fig. 4 drei mit 36, 37, 38 bezeichnet sind. Weiterhin werden auf dem Niveau von Bahnen, die von der Karosserie durchlaufen werden, symbolisch die Zerstäuber 7, 8, 9 mit ihren auf dem Objekt wirksamen Sprühkegelquerschnitt 7a, 8a, 9a dargestellt. An den Zerstäubern sind Anzeigefelder in Form von Rechtecken 39, 40, 41 für die Zerstäuberbezeichnung vorhanden. In einer Zeile 42 ist eine X-Koordinatenachse mit auf die Karosserie bezogenen Massangaben dargestellt. Darunter befinden sich sechs Zeilen 43, 44, 45, 46, 47, 48 eines Eingabefelds.

In der Zeile 43 werden der Karosserietyp und die Kennung des ausgewählten Zerstäubers alphanumerisch angezeigt. In der Zeile 43 sind Teilflächenkennungen angegeben, deren Hüllkurven parametriert werden können. Eine mittels der Zeile 43 ausgewählte Fläche wird mittels der Zeilen 45 bis 48 editiert. Der Stations-Status und die globale Fehlermeldung sind in gleicher Weise wie bei den oben beschriebenen Fenstern vorhanden.

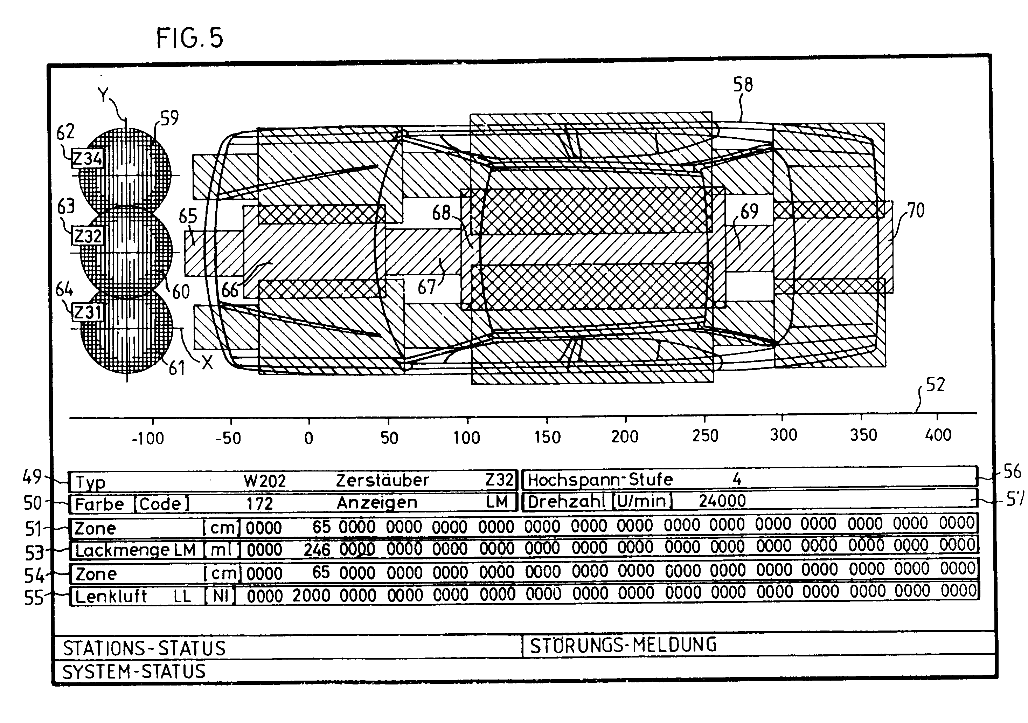

Für die Parametrierung und überwachung von Technologiedaten ist das in Fig. 5 dargestellte Fenster vorgesehen.

Mittels des in Fig. 5 dargestellten Fensters werden Farbmengen, Luftmengen und Zonen parametriert, für die in Transportrichtung der Karosserie verschiedene Farbmengen und Luftmengen den jeweiligen Zerstäubern vorgegeben werden. Die Parametrierung hängt vom Karosserietyp, der Farbe und dem Zerstäuber ab. Deshalb ist ein Eingabefeld vorgesehen, das eine Zeile 49 enthält, mit der auf die oben bereits angegebene Weise der entsprechende Typ eingegeben und angezeigt wird. In der gleichen Zeile 49 ist eine Eingabe und Anzeige der Kennziffer eines Zerstäubers vorgesehen, der in Fig. 5 mit Z32 bezeichnet ist. Es handelt sich dabei um den in Fig. 1 mit 8 bezeichneten Zerstäuber der Dachmaschine. Die darunter liegende Zeile 50 ist für die Eingabe und Anzeige des Codes einer Farbe bestimmt, die in Fig. 5 mit "172" bezeichnet ist. In der gleichen Zeile 50 ist eine Eingabe und Anzeige für die Auswahl des jeweils zu editierenden Einstellwerts vorgesehen. Gem. Fig. 5 soll die Lackmenge für den Zerstäuber Z32 editiert werden, weshalb die Abkürzung "LM" für die Lackmenge erscheint.

Die Lackmenge für den Zerstäuber Z32 wird zonenanabhängig vorgegeben. Daher sind in einer Zeile 51 unterhalb der Zeile 50 die einzelnen aufeinanderfolgenden Zonen alphanumerisch eingebbar und darstellbar. Die Zahlenwerte für die Zonen beziehen sich auf die in einer Linie 52 dargestellten Koordinatenwerte eines kartesichen Koordinatensystems. Die Linie 52 wird oberhalb des Eingabefelds angezeigt. Unterhalb der Zeile 51 ist eine Zeile 53 für die numerische Eingabe und Anzeige der Lackmenge je Zone vorgesehen. Unterhalb der Zeile 53 befindet sich eine Zeile 54 für die numerische Eingabe und Anzeige der Zonen, die der Lenkluft zugeordnet ist. Die nächste Zeile 55 ist für die Eingabe und Anzeige numerischer Einstellwerte für die Lenkluft bestimmt. Die Zeilen 49, 50 setzen sich, durch eine vertikale Leiste voneinander getrennt, je in Zeilen 56, 57 fort, die jeweils für die Anzeige einer Hochspannungseinstellung für den Zerstäuber Z32 und dessen Drehzahl vorgesehen sind.

Oberhalb der Linie 52 ist eine Ansicht 58 einer Karosserie dargestellt. Es handelt sich dabei um eine Draufsicht. Vor der Ansicht 58 sind symbolisch die Zerstäuber 7, 8, 9 in Form von Kreisscheiben 59, 60, 61, dargestellt, die die Grösse der wirksamen Sprühkegel auf der Karosserie angeben. Die Kreisscheiben 59, 60, 61 sind jeweils einem Eingabe- und Anzeigefeld 62, 63, 64 zugeordnet, mit denen jeweils der Zerstäuber ausgewählt wird.

In Verbindung mit der Ansicht 58 sind graphisch für die drei Zerstäuber 7, 8, 9 in Höhe der Kreisscheiben 59, 60, 61 die parametrierten Werte zonenabhängig dargestellt. Die Werte sind durch Rechtecke dargestellt. Für den Zerstäuber 8, der mit Z32 gekennzeichnet ist, wird die Lackmenge in Abhängigkeit von den Zonen dargestellt. Für die Zone, die mit dem Koordinatenwert 65 beginnt, ist eine Lackmenge 246 vorgesehen, die mit einem Rechteck 65 angezeigt wird. Die Lackmengen der weiteren Zone sind durch Rechtecke 66, 67, 68, 69, 70 angezeigt. Die Lackmenge ist dabei in Y-Koordinatenrichtung dargestellt. Die weiteren Rechtecke oberhalb und unterhalb der Rechtecke 66 bis 70 sind für die einzelnen Zonen den Zerstäubern 7 und 9 zugeordnet. Die Koordinatenachsen in X- und Y-Richtung sind nochmals jeweils in Verbindung mit den Kreisscheiben 59, 60, 61 dargestellt. Die Rechtecke 66, 67, 68, 69, 70 geben in Y-Richtung die Lackmengen an, wobei die Werte jeweils auf die X-Koordinatenachsen bezogen sind, die durch die Mitten der Kreisscheiben 59, 60, 61 verlaufen. Die Werte erstrecken sich aus Symmetriegründen beiderseits der X-Koordinatenachsen und können sich bei den einzelnen Zerstäubern überdecken. Zur Unterscheidung der sich überdeckenden Flächen sind diese mit Schraffuren versehen, die in verschiedenen Richtungen verlaufen. Die jeweils für eine Edition über das Eingabefeld aufgerufenen Parameter werden in einer vorgegebenen Farbe auf dem Feld dargestellt. Diese Farbe ist z. B. grün. Der Einstellwert 246 wird deshalb grün unterlegt dargestellt. Weiterhin sind die Rechtecke 66 bis 70 grün gestellt. Diejenigen Grössen, die für die Parametrierung über das Eingabefeld ausgewählt werden können, sind in einer anderen Farbe, z. B. blau, dargestellt.

Auf einem Monitor werden daher die Zeilen 49, 50, 53, 55, 56 und 57 blau dargestellt. Die Zeilen 51 und 54 sind bei dem in Fig. 5 gezeigten Feld nicht parametierbar, da sie in einem anderen Feld vorab parametriert werden müssen. Deshalb sind die Zeilen 51 und 54 in einer weiteren Farbe, z. B. gelb, dargestellt. Das in Fig. 5 gezeigte Feld weist ebenso wie die oben beschriebenen Felder Zeilen für einen Stations-Status eine globale Störungsmeldung und einen System-Status auf, die jeweils grün, rot und gelb angezeigt werden.

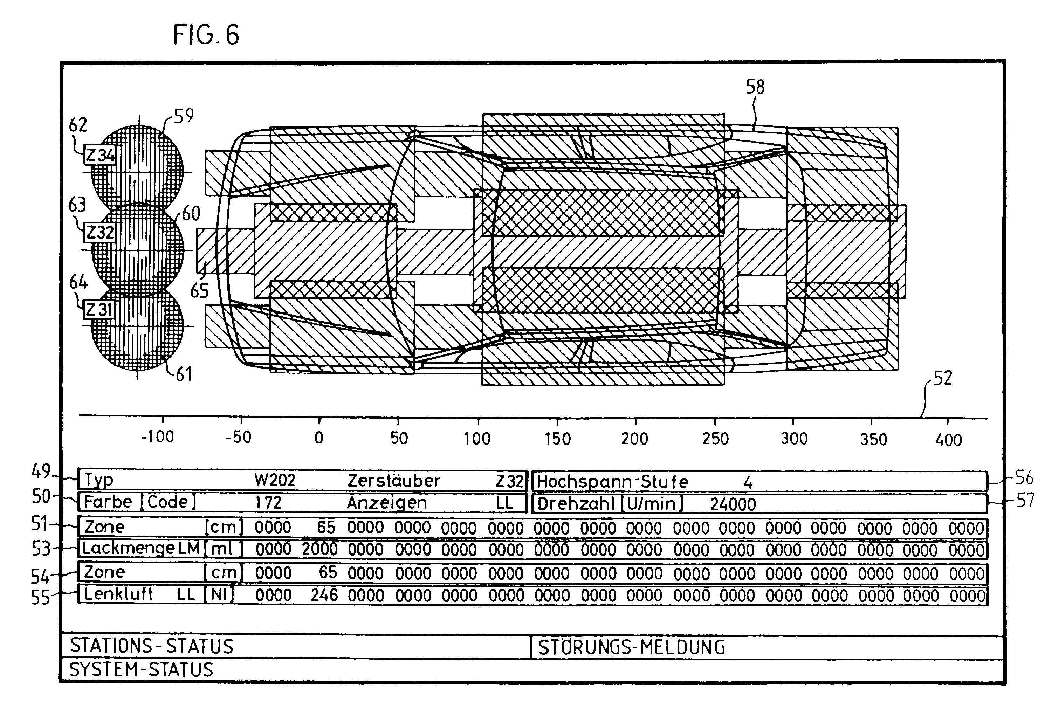

Die Fig. 6 zeigt ein Feld, dessen Zeilen und graphische Darstellung weitgehend mit demjenigen des Felds gem. Fig. 5 übereinstimmen. übereinstimmende Elemente wurden in Fig. 5 und 6 mit den gleichen Bezugsziffern versehen. Mit dem Feld gem. Fig. 6 wird aber nicht die Lackmenge sondern die Lenkluft für den Zerstäuber 8 parametriert, wobei Typ, Farbmenge, Farbe, Hochspannungseinstellung und Drehzahl mit den gem. Fig. 5 parametrierten Werten übereinstimmen. In Zeile 50 wird daher die Abkürzung "LL" für die Lenkluft angezeigt. Da gerade die Lenkluft für die mit dem Wert 65 beginnende Zone parametiert wird, ist der entpsrechende Einstellwert 246 grün unterlegt. Die in Verbindung mit der Ansicht 58 dargestellten Rechtecke, die für die einzelnen Zonen verschieden sind, zeigen in Ordinatenrichtung analog die Grösse der Lenkluft für die drei Zerstäuber 7, 8, 9 an. Die Rechtecke sind in verschiedenen Richtungen schraffiert, so dass eine eindeutige Unterscheidung auch bei überlappungsstellen möglich ist.

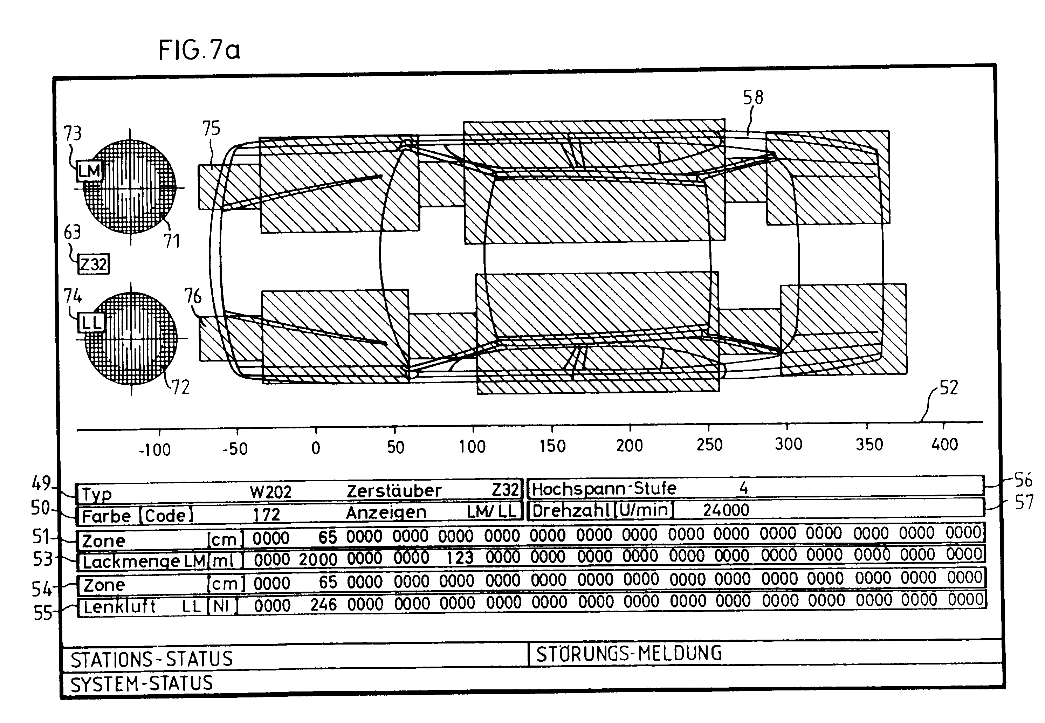

Die Fig. 7a zeigt ein Feld, mit dem für einen ausgewählten Zerstäuber, z. B. den mit Z32 bezeichneten Zerstäuber, zwei Einstellwerte, nämlich sowohl die Lackmenge als auch die Lenkluft parametiert werden können.

In den Zeilen unterscheidet sich das Feld gem. Fig. 7a nicht von den Feldern gem. Fig. 5 und 6. Gleich ist auch die graphische Darstellung der Ansicht 5 der Karosserie. Gleiche Elemente in den Fig. 5, 6 und 7 sind daher mit den gleichen Bezugsziffern versehen.

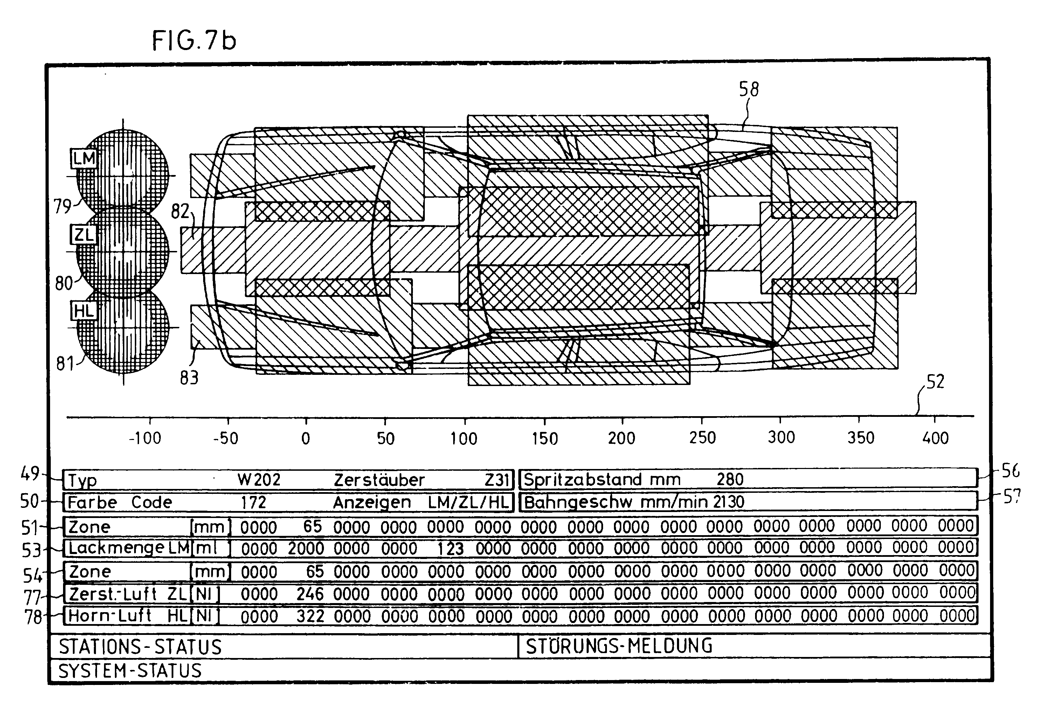

Da sowohl die Lackmenge wie die Lenkluft parametrierbar sind, erscheinen in der Zeile 50 neben der Farbe die Abkürzungen "LM/LL". Es werden keine drei Kreisscheiben neben der Ansicht 58 dargestellt, sondern nur zwei Kreisscheiben 71, 72 mit Anzeigefeldern 73, 74 für die Lackmenge und die Lenkluft. Daneben wird zwischen den Kreisscheiben 71, 72 noch das Anzeigefeld 63 für den Zerstäuber Z32 bzw. 9 angezeigt. Die Kreisscheiben 73, 74 haben unterschiedliche Farben, in denen auch die in Verbindung mit der Ansicht 58 graphisch dargestellten Rechtecke dargestellt sind, die in analoger Form die den einzelnen Zonen zugeordneten Werte der Lackmengen und der Lenkluft angeben. Bezeichnet sind in Fig. 7 nur die Rechtecke 75 der Lackmenge und 76 der Lenkluft, wobei die Werte analog in Ordinatenrichtung erscheinen. Die Fig. 7b zeigt ein Feld, das ebenso wie die Felder gem. Fig. 5, 6 und 7a die Zeilen 49, 51, 53, 54, 56 und 57 enthält. Die Zeile 49 ist für die Eingabe und Darstellung des Karosserietyps und eines ausgewählten Zerstäubers bestimmt, dem die Kennung Z31 zugeordnet ist. Die Zeile 50 ist für die Eingabe und Darstellung des jeweiligen Farbcode und der Art der Anzeigen vorgesehen. Neben der Lackmenge, die kurz mit "LM" bezeichnet ist, werden noch die Zerstäuber-Luft und die Horn-Luft dargestellt und können als Parameter eingegeben werden. Für die Eingabe und Darstellung der mit "ZL" bezeichneten Zerstäuber-Luft und der mit "HL" bezeichneten Horn-Luft, sind zwei Zeilen 77, 78 vorgesehen. Die Zeilen 56 und 57 zeigen jeweils den Spritzabstand und die Bahngeschwindigkeit an.

Neben der Ansicht 58 der Karosserie sind drei Kreisscheiben 79, 80, 81 vorgeseheh, die jeweils die Farben und das Niveau der graphischen Anzeigen der Lackmenge, Zerstäuber-Luft und der Horn-Luft angeben. In den Kreisscheiben sind die Kurzbezeichnungen der jeweiligen Einstellgrössen angegeben.

In Verbindung mit der Ansicht 58 sind für die aufeinanderfolgenden Zonen neben den Kreisscheiben 79, 80, 81 Rechtecke dargestellt, die in Abszissenrichtung die Längen der Zonen und in Ordinatenrichtung die Einstellwerte der Lackmenge, Zerstäuber-Luft und Horn-Luft angeben. Für die erste Zone geben die Rechtecke 82, 83 in Ordinatenrichtung die in den Zeilen 77, 78 numerisch angezeigten Werte der Zerstäuber-Luft und der Horn-Luft für den Zerstäuber 8 an.

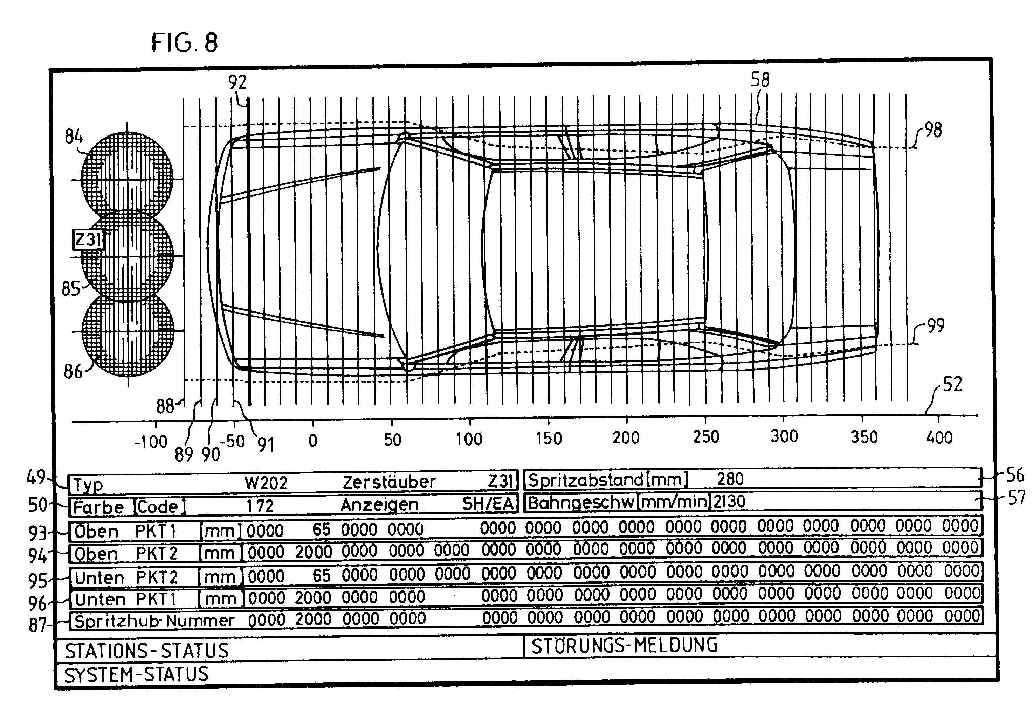

In Fig. 8 ist ein Fenster dargestellt, das die Parametrierung der Anzahl der Spritzhübe je Zone sowie der Ein-, Ausschaltpunkte der Spritzhübe ermöglicht. Ebenso wie bei den oben beschriebenen Feldern ist eine Linie in X-Koordinatenrichtung mit massstabsgerechten Längenangaben vorhanden. Weiterhin wird die Ansicht 58 der Karosserie masstabsgerecht in bezug auf den Masstab der Linie 52 angezeigt. Neben der Karosserie sind durch Kreisscheiben 84, 85, 86 symbolisch die Zerstäuber 7, 8, 9 dargestellt. Wie bei den oben bereits beschriebenen Feldern sind die Zeilen 49, 50 und 56, 57 vorhanden. Mit der Zeile 49 werden der Typ und der ausgewählte Zerstäuber eingegeben und dargestellt. Die Zeile 50 ist für die Anzeige und Eingabe der Farbe und der Art der Anzeigen bestimmt. Mit dem Feld gem. Fig. 8 werden die Spritzhübe, die abgekürzt mit "SH" bezeichnet sind, und die Ein-, Ausschaltpunkte, die abgekürzt mit "EA" bezeichnet sind, zonenabhängig parametriert. Die Anzahl der Spritzhübe wird mit einer Zeile 87 eingegeben und dargestellt. In Verbindung mit der Ansicht 58 wird die Anzahl der Spritzhübe durch Linien, z. B. 88, 89, 90, 91, 92 für die erste Zone dargestellt. Für die numerische Eingabe und Anzeige der Ein-, Ausschaltpunkte sind die Zeilen 93, 94, 95, 96 bestimmt. Mit den Zeilen 93, 94 können obere Ein-, Ausschaltpunkte der Zerstäuber und mit den Zeilen 95, 96 untere Ein-, Ausschaltpunkte der Zerstäuber festgelegt werden. Kurven 98, 99 zeigen an den Spritzhüben die Ein-, Ausschaltpunkte an.

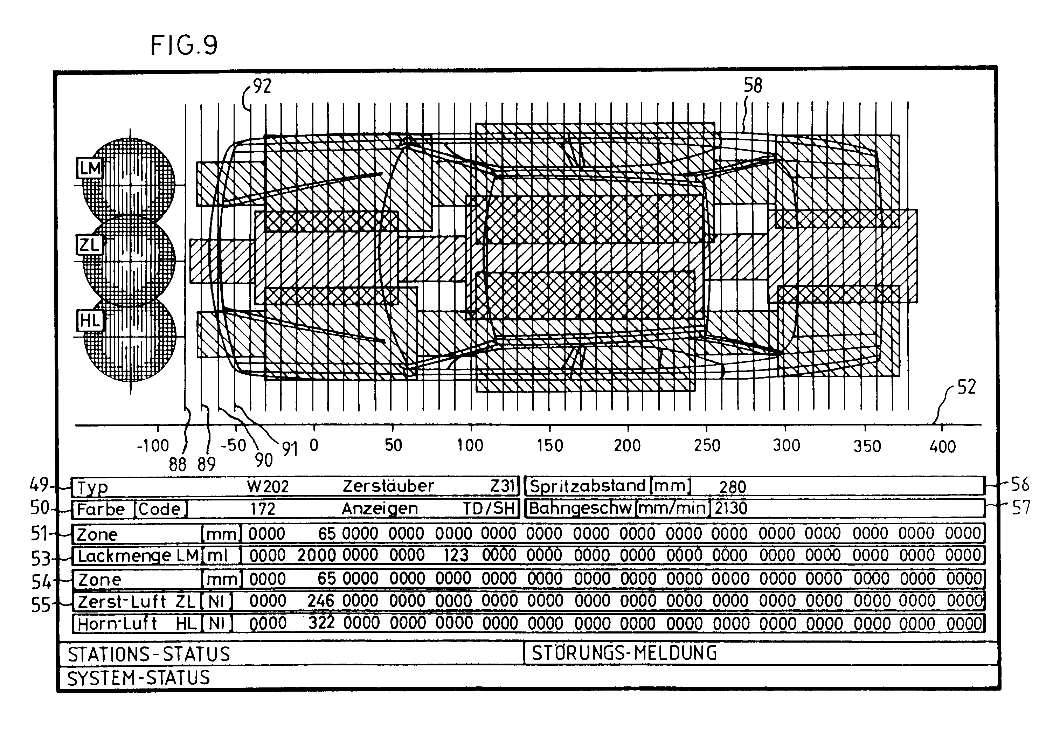

Die Fig. 9 zeigt ein Feld, mit dem Technologiedaten, nämlich Lackmenge, Zerstäuber-Luft, und Horn-Luft parametiert werden können, wobei zugleich die Anzahl der Spritzhübe je Zone angezeigt wird. Bis auf die dargestellten Spritzhübe, stimmt das Feld mit dem in Fig. 7b gezeigten Feld überein. Es wurden für die gleichen Elemente in Fig. 7b und 9 die gleichen Bezugsziffern verwendet.

Wie bei dem in Fig. 8 dargestellten Feld sind die Spritzhübe als Linien in Verbindung mit der Ansicht 58 der Karosserie dargestelt. Für die erste Zone sind in Fig. 9 Linien mit 88, 89, 90, 91 und 92 bezeichnet. In der Zeile 50 wird als Anzeige "TD", eine Bezeichnung für Technologiedaten, und "SH" angegeben.

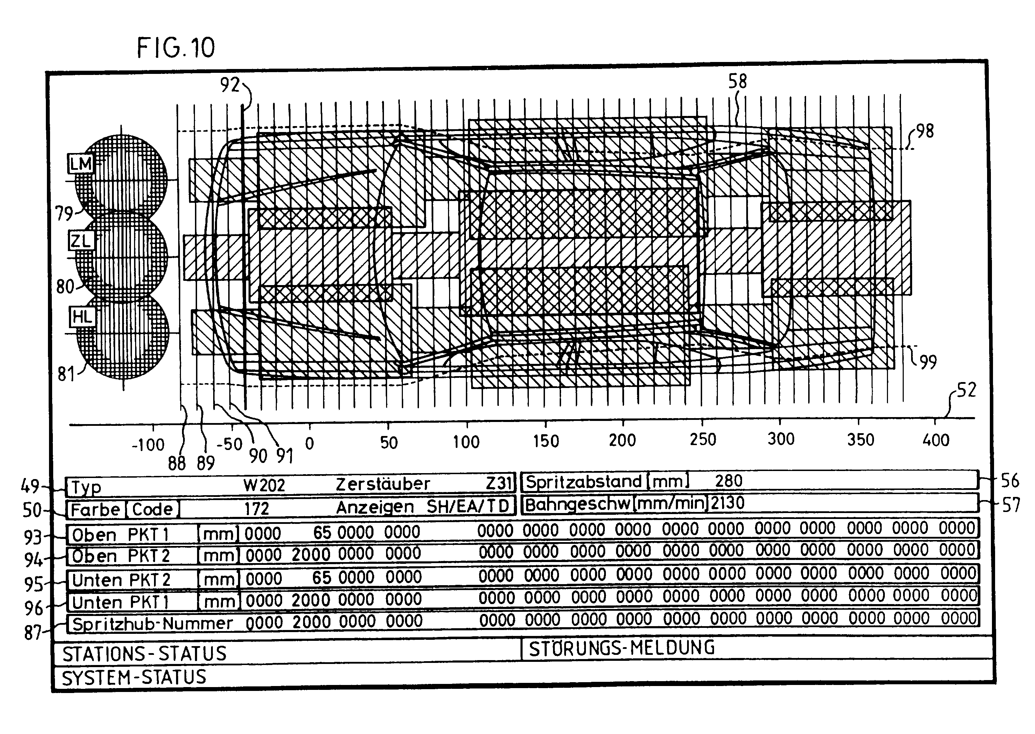

Die Fig. 10 zeigt ein Feld, das neben den in Fig. 8 dargestellten Einstellwerten noch Technologiedaten anzeigt. Die Zeilen für die Eingabe und Anzeige sind die gleichen wie gem. Fig 8 und daher mit den gleichen Bezugsziffern versehen. Zusätzlich zu den Daten gem. Fig. 8 sind in der Fig. 10 noch Technologiedaten für den in Zeile 49 angezeigten Zerstäuber Z31 zonenabhängig graphisch dargestellt. Dies ist in Zeile 50 durch die zusätzliche Angabe "TD" berücksichtigt. Die Technologiedaten beziehen sich auf die Lackmenge, Zerstäuber-Luft und Horn-Luft, was durch die gleichen Kreisscheiben 79, 80, 81 wie in Fig. 7b mit den Vermerken LM, ZL und HL angegeben wird.

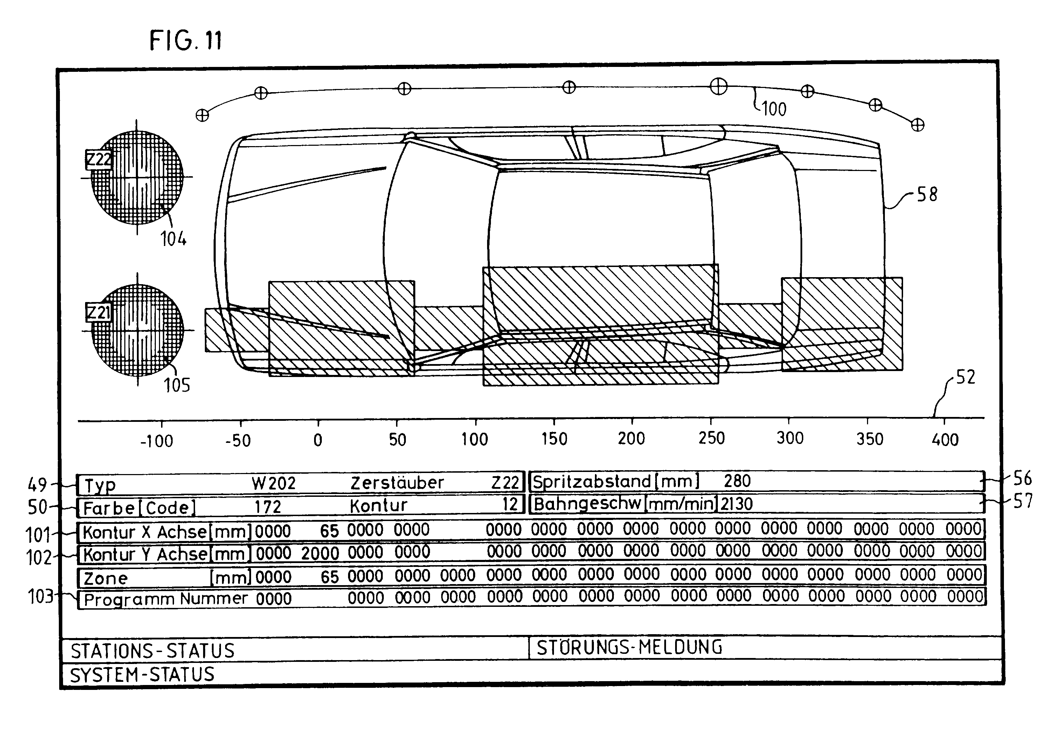

Die Fig. 11 zeigt in Verbindung mit einer Ansicht 58 der Karosserie von oben die vom Zerstäuber 10 längs der Karosserie beschriebene Kontur 100, die in Richtung der X- und Y-Achse festgelegt wird. Als Felder zur Eingabe und Anzeige numerischer Einstellwerte sind die Zeilen 49, 50 und 56, 57 vorhanden. In der Zeile 50 wird eine bestimmte Kontur-Nummer angegeben, die grapisch dargestellt und mit 100 bezeichnet ist. Die einzelnen Punkte der Konturen an den Enden der Zonen werden mit Werten in X- und Y-Koordinatenrichtung festgelegt. Hierfür sind die Zeilen 101, 102 vorgesehen. Eine weitere Zeile ist für die Eingabe und Anzeige der Zonen bestimmt. In den zusätzlichen Zeilen 102 wird zu jeder Zone eine ausgewählte Programm-Nummer angegeben.

Neben der Ansicht 58 werden mit zwei Kreisscheiben 104, 105 die Zerstäuber 10, 11 symbolisch mit ihren Kennzeichnungen Z12, Z21 dargestellt.

Nach dem oben beschriebenen Verfahren können Lackierautomaten insbesondere für Autokarosserien parametriert werden. Bei der Parametrierung werden dem Bediener in übersichtlicher Form die Einstellwerte angezeigt, die für eine gleichbleibende Lackierqualität von Bedeutung sind. Der Lackierprozess wird von der Geometrie der Spritzdüsenbahn und der Karosserie, der Lackiergeschwindigkeit, der Lackdurchflussmenge pro Zeiteinheit, der Zerstäubungs- und Hörnerluft, der elektrischen Feldstärke, der Viskosität und dem Festkörperanteil des Lacks beeinflusst. Die nach dem oben beschriebenen Verfahren arbeitende Anzeige lässt zahlreiche dieser Parameter zugleich erkennen, so dass bei Änderung der Werte eines Parameters der daraus auf andere Parameter ausgeübte Einfluss sofort zu ersehen ist. Damit lässt sich nicht nur eine günstige Parametereinstellung erreichen, sondern auch die Parametereinstellung on-line zeitlich verkürzen. Das Verfahren kann beim pneumatischen Lackieren und beim elektrostatischen Lackieren eingesetzt werden. Das pneumnatische Lackieren schliesst das auf Druckluft-Systemen, Airless-Spritzsystemen und Air-Mixsystemen beruhende Verfahren ein. Beim Druckluftspritzen wird zumeist das Hochdruckspritzen verwendet. Lackmaterial befindet sich in einem Druckkessel, in dem mit Hilfe von Druckluft ein überdruck hervorgerufen wird, durch den das Lackmaterial zu Hochdruck-Spritzpistolen transportiert wird, die Spritzdüsen aufweisen. Den Spritzdüsen wird Lackmaterial und Luft zugeführt. Das aus den Düsen austretende Lackmaterial ist ringförmig von schnell strömender Luft umgeben. Die aus der Spritzdüse ausgetretenen Lackteilchen bilden einen Spritzkegel. Zusätzlich kann die Hörnerluft eingeschaltet sein, bei der durch seitliche Luftkopfbohrungen Luftstrahlen eingeführt werden, die zur Regulierung der Spritzkegelform und zur Unterstützung des Zerstäubervorgangs dienen. Mit eingeschalteter Hörnerluft wird der Spritzkegel verformt. Die Kenntnisse über die Zusammenhänge zwischen Spritzstrahlform, Konzentrationsverteilung des Lacks pro Zeiteinheit im Spritzkegel sowie über die Prozess- und lackparameter werden vor allem empirisch gewonnen. Das oben beschriebene Verfahren erleichtert die Gewinnung dieser Kenntnisse bei on-line-Parametrierung mit gleichzeitiger Prüfung der Auswirkung der Einstellungen auf die lackierten Gegenstände.

Die Zerstäuber 7 bis 11 fahren jeweils entlang vorgegebener Bewegungsbahnen mit entsprechend eingestellten Prozessparametern. Die Spritzdüsenausrichtung und die Spritzdüsengeschwindigkeit bestimmen dabei wesentlich den Lackschichtaufbau. Zur Lackierung überlappen sich die einzelnen Spritzkegel. Die Lackteilchen verlaufen auf der lackierten Oberfläche. Eine gleichmässige Lackschichtdicke hängt insbesondere auch von der Spritzdüsengeschwindigkeit und der Lackdurchflussmenge pro Zeiteinheit ab.

Das Airless-Spritzen arbeitet mit einer Spritzdüse, der das Lackmaterial unter sehr hohem Druck zugeführt wird. Die Spritzdüse hat einen sehr engen Durchmesser.

Beim elektrostatischen Lackieren wird zwischen dem zu lackierenden Werkstück und dem elektrisch isoliertem Sprühelement ein elektrostatisches Feld mit hoher Gleichspannung aufgebaut. Das Lackmaterial wird von pistolen-, schalen-, glocken- oder scheibenförmigen Sprühwerkzeugen zerstäubt. Es entsteht dabei ein Sprühkegel. Die elektrostatische Lackierung kann rein elektrostatisch oder mit Hilfsenergie erfolgen. Als Hilfsenergien können Druckluft oder Zentrifugalkräfte verwendet werden. Die Zerstäuber in Form von rotierenden Glocken sorgen bei hohen Drehzahlen für die gleichmässige Verteilung des Lacks. Bei Hochgeschwindigkeits-Rotationssystemen hat die elektrische Feldstärke auf den Zerstäubervorgang nur einen geringen Einfluss. Lenkluft wird bei diesen Systemen zur Regulierung der Sprühstrahlbreite benötigt. Die Prozessparameter, wie Drehzahl, Lackdurchflussmenge pro Zeiteinheit und Sprühabstand, werden durch das oben beschriebene Verfahren an die Karosseriekontur angepasst.

Bekannt ist noch das elektrostatische Druckluft-Spritzen sowie die elektrostatische Pulverlack-Beschichtung. Bei letzter wird eine Sprühkabine, ein Pulversprühgerät, ein Abscheidesystem, eine Pulveraufbereitung und eine Pulverdosiereinrichtung verwendet. Das oben beschriebene Parametrierungsverfahren lässt sich für die angegebenen Beschichtungsverfahren einsetzen.

## Patentansprüche

1. Verfahren zur Eingabe und Anzeige der Einstellungsparameter einer Vorrichtung zum Beschichten von Gegenständen (1), insbesondere Fahrzeugen oder Fahrzeugteilen, die von einer Transportvorrichtung in Beschichtungspositionen bewegt werden, wobei in eine Beschichtungsstation wenigstens ein Spritz- oder Sprühwerkzeug (7,8,9,10,11) fest oder relativ zu den Gegenständen bewegbar angeordnet ist und nach den Einstellungsparametern gesteuerte Stellglieder aufweist,
**dadurch gekennzeichnet,**
dass auf einem Monitor (15) eines Personalcomputers, welcher Parametrierdaten, die von einer Eingabevorrichtung für die Beschichtungsvorrichtung erzeugt werden, entweder off-line speichert oder on-line an eine mit der Beschichtungsvorrichtung verbundene Programmsteuerung weiterleitet, mit mindestens einem Fenster eine graphische Ansicht (58) des Gegenstands (1) masstabsgerecht und die auf der Oberfläche des Gegenstandes (1) vorhandene Beschichtungsfläche (59, 60, 61) des wenigstens einen Spritzwerkzeug (7,8,9,10,11) neben der Ansicht (53) des Gegenstands dargestellt werden, dass in der Ansicht des Gegenstands in dessen Transportrichtung nacheinander Beschichtungszonen längs einer durch die Mitte des dargestellten Spritzwerkzeugs verlaufenden Linie schematisch durch Rechtecke (65, 66, 67, 68, 69, 70) dargestellt werden, deren Länge jeweils ein Mass für die Beschichtungszonenlänge und deren Höhe jeweils ein Mass für einen Einstellwert des Spritzwerkzeugs ist, dass unter der Ansicht des Gegenstands Zeilen (49, 50) eines Eingabefelds mit alphanumerischen Angaben des Typs des angezeigten Gegenstands und der Kennung des über die Eingabevorrichtung für die Parametrierung aufrufbaren Spritzwerkzeugs und wenigstens die Beschichtungszonenlängen mit einem weiteren parametrisierbaren Einstellwert angezeigt werden und dass die off- oder on-line Betriebsart der Programmsteuerung und eine Sammelmeldung über Störungen angezeigt werden.

2. Verfahren nach Anspruch 1,
**dadurch gekennzeichnet**,
dass die Einstellwerte der jeweils für eine Edition aufgerufenen Spritzwerkzeuge oder Stellglieder in einer vorgegebenen Farbe auf dem Monitor angezeigt werden.

3. Verfahren nach Anspruch 1 oder 2,
**dadurch gekennzeichnet**,
dass die Einstellwerte der nicht für die Edition aufgerufeen Spritzwerkzeuge oder Stellglieder in einer anderen, vorgegebenen Farbe angezeigt werden.

4. Verfahren nach einem oder mehreren der vorhergehenden Ansprüche,
**dadurch gekennzeichnet**,
dass mit dem Fenster Einstellwerte von Komponenten angezeigt werden, die nicht über das Fenster editierbar sind und in einer weiteren, vorgegebenen Farbe angezeigt werden.

5. Verfahren nach einem oder mehreren der vorhergehenden Ansprüche,
**dadurch gekennzeichnet**,
dass auf dem Monitor mit einem weiteren Fenster eine Ansicht (18) des Gegenstands innerhalb eines die parametrierbare Länge und Breite der Bearbeitung anzeigenden Rechtecks (20), das innerhalb eines den notwendigen Arbeitsbereich des Spritzwerkzeugs anzeigenden Rechtecks liegt, sowie ein zweites, dem Arbeitsbereich zugeordnetes Rechteck (19) in einem transportgeschwindigkeitsabhängigekn Abstand vom ersten Rechteck (20) über Zeilen (29, 30, 31, 32, 33, 34) eines Eingabefelds dargestellt werden, in denen alphanumerisch der Typ des Gegenstands, die Fördergeschwindigkeit, der für die Bearbeitung notwendige überhang über den Gegenstand, die Lage von den Beschichtungsvorgang einleitenden Startnocken und die Länge und Breite des jeweiligen Gegenstands dargestellt werden.

6. Verfahren nach einem oder mehreren der vorhergehenden Ansprüche,
**dadurch gekennzeichnet**,
dass auf dem Monitor mit einem Fenster eine Ansicht mit dem Umriss des jeweiligen Gegenstands und eine ausgewählte Teilfläche (36) für ein Spritzwerkzeug neben dem Spritzwerkzeug (Z32) graphisch sowie der des Gegenstands, die Anzahl der Teilflächen, das ausgewählte Spritzwerkzeug und die Hüllkurvenkoordination alphanumerisch in Zeilen (43, 44, 45, 46, 47, 48) dargestellt werden.

7. Verfahren nach einem oder mehreren der vorhergehenden Ansprüche,
**dadurch gekennzeichnet**,
dass Felder mit Zeilen für die Parametrierung der Lackmenge je Zone und Spritzwerkzeug und der Lenkluft vorgesehen sind.

8. Verfahren nach einem oder mehreren der vorhergehenden Ansprüche,
**dadurch gekennzeichnet**,
dass ein zusätzliches Fenster für die Eingabe und Anzeige der Spritzhübe alphanumerisch und in Form von auf der graphischen Ansicht des Gegenstands dargestellten parallelen Strichen in Verbindung mit technologischen, durch Rechtecke zonenabhängig ausgegebenen Daten vorgesehen, die für einen Zerstäuber auswählbar sind und dass ein weiteres Eingabefeld vorhanden ist, mit dem die Umkehrpunkte der Spritzhübe numerisch vorgebbar sind.

9. Verfahren nach einem oder mehreren der vorhergehenden Ansprüche,
**dadurch gekennzeichnet**,
dass ein Fenster vorgesehen ist, auf dem eine Draufsicht des Gegenstands und im Abstand davon eine Kontur in bezug auf dasjenige Spritzwerkzeug dargestellt werden, dass in einem Eingabefeld in Zeilen der Typ des Gegenstands, die Farbe, die Konturkennung, die Zonen und die Achsabstände des Spritzwerkzeugs von einer Bezugslinie sowie eine Kennung für ein Programm vorgegeben werden, das sich auf die vom Spritzwerkzeug zurückzulegende Bahn in der jeweiligen Zone bezieht.

10. Verfahren nach einem oder mehreren der vorhergehenden Ansprüche,
**dadurch gekennzeichnet**,
dass die Gegenstände Fahrzeuge oder Fahrzeugteile wie Karosserien sind.

## Claims

1. Method of entering and displaying the adjustment parameters of an apparatus for coating objects (1), particularly vehicles or vehicle parts, that are moved into coating positions by a transport apparatus, with at least one spraying or atomizing tool (7, 8, 9, 10, 11) being disposed in a coating station so as to be stationary or to move relative to the objects, and having control elements which are controlled according to the adjustment parameters,
**characterized in that**,
on a monitor (15) of a personal computer which either stores parametrization data generated by an input apparatus for the coating apparatus offline or further conducts them online to a program control connected to the coating apparatus, the monitor having at least one window, a graphic view (58) of the object (1) and, next to the view of the object and on the correct scale, the coating surface (59, 60, 61) of the at least one spraying tool (7, 8, 9, 10, 11) present on the surface of the object (1) are represented, that coating zones following one after the other in the transport direction of the object are represented schematically by rectangles (65, 66, 67, 68, 69, 70) along a line extending through the center of the represented spraying tool in the view of the object, the length of the rectangles being a measure for the length of the coating zones, and their height being a measure for an adjustment value of the spraying tool, that rows (49, 50) of an input field containing numerical information about the type of displayed object and the identification of the spraying tool that can be called up via the input apparatus for parametrization are displayed below the view of the object, and at least the coating zone lengths are displayed with a further adjustment value that can be parametrized, and that the off- or online operating mode of the program control and a summarizing message about interference are displayed.

2. Method according to claim 1,
**characterized in that**
the adjustment values of the respective spraying tools or control elements called up for editing are displayed in a predetermined color on the monitor.

3. Method according to claim 1 or 2,
**characterized in that**
the adjustment values of the spraying tools or control elements not called up for editing are displayed in a different, predetermined color.

4. Method according to one or more of the foregoing claims,
**characterized in that**
adjustment values of components that cannot be edited via the window and are displayed in a different, predetermined color are displayed with the window.

5. Method according to one ore more of the foregoing claims,
**characterized in that**
a view (18) of the object is represented on the monitor within a rectangle (20) indicating the length and width of the processing, which can be parametrized, the rectangle lying inside a rectangle displaying the necessary working region of the spraying tool, with a second rectangle (19) associated with the work region and at a transport-speed-dependent distance from the first rectangle (20) also being represented, via rows (29, 30, 31, 32, 33, 34) of an input field, in which the type of object, the conveying speed, the projection over the object that is necessary for processing, the position of the start cam that initiates the coating process, and the length and width of the respective object are represented.

6. Method according to one or more of the foregoing claims,
**characterized in that**
in addition to the spraying tool (Z32), a view with the contour of the respective object and a selected partial surface (36) for a spraying tool are preferably represented graphically on the monitor having a window, with the type of object, the number of partial surfaces, the selected spraying tool and the envelope curve coordinates being represented alphanumerically in rows (43, 44, 45, 46, 47, 48).

7. Method according to one or more of the foregoing claims,
**characterized in that**
fields are provided which have rows for the parametrization of the paint quantity for each zone, and of the spraying tool and the steering air.

8. Method according to one or more of the foregoing claims,
**characterized in that**
an additional window is provided for the entry and display of the spraying strokes alphanumerically and in the form of parallel dashes represented on the graphic view of the object, in connection with technological data indicated by rectangles as a function of the zones, which data can be selected for an atomizer, and that a further input field is provided, with which the reversal points of the spraying strokes can be predetermined numerically.

9. Method according to one or more of the foregoing claims,
**characterized in that**
a window is provided on which a top view of the object and, at a distance therefrom, the contour in connection with the respective atomizer are represented, with the type of object, the color, the contour identification, the zones and the axis spacing of the atomizer from a reference line and an identification for a program being given in rows in an input field, the program relating to the path in the respective zone to be traversed by the spraying tool or atomizer.

10. Method according to one or more of the foregoing claims,
**characterized in that**
the objects are vehicles or vehicle parts, such as bodies.

## Revendications

1. Procédé pour l'introduction et l'affichage des paramètres de réglage d'un dispositif pour revêtir des objets (1), en particulier des véhicules ou des pièces de véhicules, qui sont déplacés par un dispositif de transport dans des positions de revêtement, au moins un outil de projection ou de pulvérisation (7, 8, 9, 10, 11) étant disposé dans un poste de revêtement de façon fixe ou mobile par rapport aux objets et présentant des actionneurs commandés selon les paramètres de réglage, caractérisé en ce que sur un moniteur (15) d'un ordinateur individuel, qui soit mémorise en différé des données de paramétrage générées par un dispositif d'entrée pour le dispositif de revêtement soit les transmet en ligne à une commande de programme reliée au dispositif de revêtement, on présente avec au moins une fenêtre une vue graphique (58) de l'objet (1) à l'échelle et la surface de revêtement (59, 60, 61), présente sur la surface de l'objet (1), d'au moins un outil de projection (7, 8, 9, 10, 11) en plus de la vue (53) de l'objet, en ce que, dans la vue de l'objet, des zones de revêtement sont représentées schématiquement dans son sens de transport de façon successive, le long d'une ligne traversant le centre de l'outil de projection représenté, par des rectangles (65, 66, 67, 68, 69, 70) dont la longueur est respectivement une référence pour la longueur de ses zones de revêtement et dont la hauteur est une référence pour une valeur d'ajustage de l'outil de projection, en ce que, sous la vue de l'objet, on affiche des lignes (49, 50) d'un champ d'entrée avec des indications alphanumériques du type de l'objet affiché et de la caractéristique de l'outil de projection qui peut être appelé par le dispositif d'entrée pour le paramétrage et au moins les longueurs de zones de revêtement avec une autre valeur d'ajustage paramétrable et en ce que le mode d'exploitation en différé ou en ligne de la commande de programme et un message collectif concernant des incidents sont affichés.

2. Procédé selon la revendication 1, caractérisé en ce que les valeurs d'ajustage des outils de projection ou actionneurs appelés respectivement pour une édition sont affichées dans une couleur prédéfinie sur le moniteur.

3. Procédé selon la revendication 1 ou 2, caractérisé en ce que les valeurs d'ajustage des outils de projection ou actionneurs appelés pour l'édition sont affichées dans une autre couleur prédéfinie.

4. Procédé selon l'une quelconque ou plusieurs des revendications précédentes, caractérisé en ce que, avec la fenêtre, on affiche des valeurs d'ajustage de composants qui ne peuvent pas être éditées par la fenêtre et sont affichées dans une autre couleur prédéfinie.

5. Procédé selon l'une quelconque ou plusieurs des revendications précédentes, caractérisé en ce que, sur le moniteur et avec une autre fenêtre, une vue (18) de l'objet à l'intérieur d'un rectangle (20) indiquant la longueur et la largeur paramétrables du traitement, qui se situe à l'intérieur d'un triangle indiquant la plage de travail nécessaire de l'outil de projection, et un deuxième rectangle (19) attribué à la plage de travail à une distance du premier rectangle (20) dépendante de la vitesse de transport sont affichés par des lignes (29, 30, 31, 32, 33, 34) d'un champ d'entrée, dans lesquelles le type de l'objet, la vitesse de transport, le surplomb sur l'objet nécessaire pour le traitement, l'emplacement des cames de démarrage déclenchant l'opération de revêtement et la longueur et la largeur de l'objet respectif sont affichés sous une forme alphanumérique.

6. Procédé selon l'une quelconque ou plusieurs des revendications précédentes, caractérisé en ce que, sur le moniteur et avec une fenêtre, une vue avec la silhouette de l'objet respectif et une surface partielle (36) sélectionnée sont affichées sous une forme graphique pour un outil de projection à côté de l'outil de projection (Z32) et la silhouette de l'objet, le nombre des surfaces partielles, l'outil de projection sélectionné et la coordination de l'enveloppante sont représentés sous une forme alphanumérique en lignes (43, 44, 45, 46, 47, 48).

7. Procédé selon l'une quelconque ou plusieurs des revendications précédentes, caractérisé en ce que des champs avec des lignes sont prévus pour le paramétrage de la quantité de laque par zone et outil de projection et de l'air de guidage.

8. Procédé selon l'une quelconque ou plusieurs des revendications précédentes, caractérisé en ce qu'on prévoit une fenêtre supplémentaire pour l'introduction et l'affichage des courses de projection sous une forme alphanumérique et sous la forme de traits parallèles représentés sur la vue graphique de l'objet en liaison avec des données technologiques et éditées par des rectangles en fonction de la zone, qui peuvent être sélectionnées pour un pulvérisateur et en ce qu'il existe un autre champ d'entrée avec lequel les points d'inversion des courses de projection peuvent être prédéfinis.

9. Procédé selon l'une quelconque ou plusieurs des revendications précédentes, caractérisé en ce qu'il est prévu une fenêtre sur laquelle sont représentées une vue de dessus de l'objet et à distance un contour par rapport à l'outil de projection, en ce que dans un champ d'entrée on prédéfinit en lignes le type de l'objet, la couleur, la caractéristique du contour, les zones et les distances d'axe en axe de l'outil de projection par rapport à une ligne de référence ainsi qu'une caractéristique pour un programme qui se rapporte à la trajectoire à parcourir par l'outil de projection dans la zone respective.

10. Procédé selon l'une quelconque ou plusieurs des revendications précédentes, caractérisé en ce que les objets sont des véhicules ou des pièces de véhicules telles que des carrosseries.
